# EUROPEAN PATENT SPECIFICATION

(11) **EP 2 736 946 B1**
(45) Date of publication and mention of the grant of the patent: **26.09.2018**
(21) Application number: 12745952.7
(22) Date of filing: 27.07.2012
(51) Int. Cl.: C08G 65/337

(54) **READILY DISSOLVABLE SOLID NONIONIC SYNTHETIC ASSOCIATIVE THICKENER WITH DISSOLUTION PROMOTION WATER SOLUBLE ADDITIVE**
LEICHT LÖSLICHER, FESTER, SYNTHETISCHER, NICHTIONISCHER ASSOZIATIVVERDICKER MIT EINEM WASSERLÖSLICHEN ADDITIV ZUR AUFLÖSUNGSFÖRDERUNG
ÉPAISSISSANT ASSOCIATIF SYNTHÉTIQUE NON IONIQUE SOLIDE POUVANT ÊTRE DISSOUS FACILEMENT COMPRENANT UN ADDITIF SOLUBLE DANS L'EAU FAVORISANT LA DISSOLUTION

(30) Priority: 28.07.2011 US 201161512640 P
(43) Date of publication of application: 04.06.2014
(73) Proprietor: Hercules LLC, Wilmington, DE 19808 (US)
(72) Inventor: NGUYEN, Tuyen, T., Newark, DE 19711 (US); BHARGAVA, Prachur, US/Lafayette, PA 19444 (US); GILLETTE, Paul, C., Newark, DE 19711 (US)
(74) Representative: Bülle, Jan
(86) International application number: PCT/US2012/048481
(87) International publication number: WO 2013/016612

(56) References cited:
- EP-A1- 0 614 950
- EP-A1- 1 408 051
- EP-A2- 0 773 263
- WO-A1-03/037989
- US-A1- 2007 116 879

## Description

### CROSS REFERENCE TO RELATED APPLICATIONS

### BACKGROUND OF THE INVENTION

### 1. Field of the Disclosed and Claimed Inventive Concepts

The presently disclosed and claimed inventive concept(s) relates generally to a particulate product comprising a nonionic synthetic associative thickener (NSAT) rheology modifier and a dissolution promotion water soluble additive, and incorporation of the paniculate product into waterborne paint formulas.

### 2. Background and Applicable Aspects of the Presently Disclosed and Claimed Inventive Concept(s)

Nonionic synthetic associative thickener (NSAT) rheology modifiers such as hydrophobically-modified ethoxylated urethane (HEUR), hydrophobically-modified polyethylene glycol (HMPEG), and hydrophobically-modified polyacetal-polyether (HMPAPE) have enjoyed widespread use in waterborne paint formulas due to their ability to provide superior rheological characteristics such as spatter and sag resistance, leveling, and brush flow. These materials are usually manufactured at the production facility, added to water as molten solids to dissolve and then shipped to customers as aqueous solutions. The active solid contents of these solutions generally range from 17 to 30 wt%.

Products delivered in this form suffer a number of drawbacks and limitations. The high water contents of these products mean that customers are paying to ship substantial quantities of water, which wastes fuel and has a negative environmental impact. In addition to excess shipping cost, these products are often packaged in drums or totes, which increases the packaging cost of the active product. Disposal or recycling of the packaging materials has both negative cost and environmental consequences.

The manufacture of waterborne coatings typically requires combining a large number of ingredients. Coatings manufacturing processes have evolved over many years to avoid degrading raw materials and flocculating particles. Water represents a key ingredient which must be added at appropriate points in the manufacturing process. This is especially true in "low" volatile organic compound (VOC) formulas where the amount of water is limited. Since the use of water to deliver NSAT rheology modifiers reduces the amount of available "free" water, it limits both product compositions and the manufacturer's process design flexibility. Furthermore when making final viscosity adjustments to achieve the desired paint viscosity. it is undesirable to add water to the paint since this effectively changes the balance of ingredients by dilution.

The hydrophobic associative nature of these products often necessitates the use of viscosity suppressants which represent a significant cost of the final product. The sole function of these additives is to reduce the viscosity of the product to permit it to be more readily handled in the coating manufacturing plant. Unfortunately, not only do these additives not contribute to the performance of the formulated paint, but they can deleteriously impact key paint properties. The viscosity suppressants often contain VOCs which are undesirable from both health and environmental standpoints.

Due to their propensity to phase separate, insoluble NSAT rheology modifier byproducts sometimes present a difficult challenge from both product stability and paint performance perspectives.

Aqueous delivery imposes environmental temperature storage restrictions as well as requires additional storage space to accommodate the product in liquid form. In the production of these materials tanks are required to both prepare and provide intermediate solution storage.

The aqueous delivery vehicle imposes constraints on the production of multifunctional products since all additives must be compatible to avoid separation.
As regards background art, reference can be made to US 2007/0116879, EP 0 773 263 and WO 03/037989.

EP 0 773 263 discloses a thickening composition for aqueous systems including latex paints and coatings comprising a solid thickener polymer and one or more surfactants. The solid thickener polymer includes associative thickeners including polyurethanes, polyesters, polyacrylamides, modified hydroxyethyl celluloses, alkali soluble emulsions and other chemicals. Specific surfactants include dialkyl sulfosuccinates, alkyl sulfates, alpha olefin sulfonates and sulfates of ethoxylated alcohols.

WO 03/037989 discloses a composition of a hydrophobically modified polyacetal-polyether or comb hydrophobically modified polyacetal-polyether and a viscosity suppressing agent of cyclodextrins or derivatives thereof.

### BRIEF SUMMARY OF THE DRAWINGS

Figure 1 is a graph comparing the relative torque build-up depicting the dissolution behavior in aqueous buffer as a function of time for powdered samples described in Examples 1 and 7.
Figure 2 is a graph comparing the relative torque build-up depicting the dissolution behavior in aqueous buffer as a function of time for powdered samples described in Examples 1 and 8.
Figure 3 is a graph comparing the relative torque build-up depicting the dissolution behavior in aqueous buffer as a function of time for powdered samples described in Examples 1 and 6.
Figure 4 is a graph comparing the relative torque build-up depicting the dissolution behavior in aqueous buffer as a function of time for powdered samples described in Examples 1 and 5.
Figure 5 is a graph comparing the relative torque build-up depicting the dissolution behavior in aqueous buffer as a function of time for powdered samples described in Examples 15 and 16.
Figure 6 is a graph comparing the relative torque build-up depicting the dissolution behavior in aqueous buffer as a function of time for powdered samples described in Examples 2 and 10.
Figure 7 is a graph comparing the relative torque build-up depicting the dissolution behavior in aqueous buffer as a function of time for powdered samples described in Examples 2 and 9.
Figure 8 is a graph comparing the relative torque build-up depicting the dissolution behavior in aqueous buffer as a function of time for powdered samples described in Examples 3 and 11.
Figure 9 is a graph comparing the relative torque build-up depicting the dissolution behavior in aqueous buffer as a function of time for powdered samples described in Examples 3 and 12.
Figure 10 is a graph comparing the relative torque build-up depicting the dissolution behavior in aqueous buffer as a function of time for powdered samples described in Examples 4 and 13.
Figure 11 is a graph comparing the relative torque build-up depicting the dissolution behavior in aqueous buffer as a function of time for powdered samples described in Example 14 and Rheolate® 208.
Figure 12 is a graph comparing the relative torque build-up depicting the dissolution behavior in paint as a function of time for powdered samples described in Examples 1 and 4.

### DETAILED DESCRIPTION

The presently disclosed and claimed inventive concept(s) relates to a particulate product comprising a nonionic synthetic associative thickener (NSAT) rheology modifier and a dissolution promotion water soluble additive. The NSAT rheology modifier used in the presently disclosed and claimed inventive concept(s) is selected from the group consisting of hydrophobically-modified ethoxylated urethane (HEUR), hydrophobically-modified polyethylene glycol (HMPEG), and hydrophobically-modified polyacetal-polyether (HMPAPE).

The dissolution promotion water soluble additive has a molecular weight (Mw) less than about 2000 Daltons.

The type and optimal concentration of the dissolution promotion water soluble additive will depend upon the chemical nature of the NSAT rheology modifier, including the hydrophobe as well as its concentration and polymer substitution level.

The dissolution promotion water soluble additive is a sugar. While not wishing to be bound by theory, it is believed that the sugar interrupts the intermolecular polymer chain hydrogen bonding of the NSAT polymer backbone. The sugars used in the presently disclosed and claimed inventive concept(s) include sucrose, fructose, glucose and sorbitol. These additives are understood to be added in a fashion that they can be intimately incorporated into the particles. A preferred means involves mixing the additive into the melt prior to production of the particles.

The particulate product in the presently disclosed and claimed inventive concept(s) permits a dramatic reduction in shipping costs, storage volume, as well as the use of lower cost, more environmentally friendly packaging materials. The particulate product can be added either to the "let-down" or "grind" stages of paint making. Especially for particles added to the "let-down" stage, there is a preferred particle size range for the powder.

The particle size of the particulate product used in the "let down" stage of paint making can be measured according to ASTM C136 - 06 Standard Test Method for Sieve Analysis of Fine and Coarse Aggregates. In one non-limiting embodiment, less than about 5% particles retained on 1.18 mm sieve (No. 16) can be used. In another non-limiting embodiment, less than about 5% particles retained on 300 micron sieve (No. 50) sieve can be used. In yet another non-limiting embodiment, less than about 5% particles retained on 150 micron sieve (No. 100) can be used.

Blends with rheology modifiers, for example but by no way of limitation, NSATs and cellulose ethers, can be produced to tailor product rheology to specific customer paint formulations. Such blends may contain dissolution promotion water soluble additives previously mentioned. NSAT polymer architectures are often tailored to address high, middle, or low shear rheology needs. Blending of products represents a means of using a small base set of rheology modifiers to produce a broad range of custom products. Examples of cellulose ethers can include, but are not limited to, hydroxyethyl cellulose (HEC), carboxymethyl cellulose (CMC), methyl cellulose (MC), methylhydroxyethyl cellulose (MHEC), ethylhydroxyethyl cellulose (EHEC), methylhydroxylpropyl cellulose (MHPC), as well as hydrophobically-modified derivatives of the aforementioned cellulose ethers.

The blends can be prepared in the molten phase prior to particle formation or as dry blends of individual powder components. In addition to tailoring rheology through blending, other functional ingredients utilized in paint manufacturing can also be incorporated into the NSAT rheology modifier particles (with or without dissolution promotion water soluble additives) to simplify paint manufacturing by reducing the number of materials which must be added during paint manufacturing. Examples of such functional ingredients can include, but are not limited to, dispersants, wetting agents, surfactants, biocidcs, antifoam, and coalescents.

The particulate product in the presently disclosed and claimed inventive concept(s) further comprises a coating composition. The coating composition includes a hydrophobic polymer, hydrophilic polymer and an amphiphilic polymer.

A method for making a particulate product comprising a nonionic synthetic associative thickener (NSAT) rheology modifier and a dissolution promotion water soluble additive, comprises the steps of: a) obtaining the NSAT rheology modifier and the dissolution promotion water soluble additive: b) mixing the NSAT rheology modifier and the dissolution promotion water soluble additive; and c) producing the particulate product from step b).

The particulate product can be prepared by using equipment in a number of ways which are known to those skilled in the art of polymer processing. Examples of suitable equipment can include, but are not limited to, spray dryers, disc pastillators, drum flakers, and grinders. Larger particles can be further reduced in size using appropriate mills. Since poly(ethylene glycol) based polymers melt at relatively low temperatures, cryogenic grinding can be beneficial. In addition, particles can be produced by solvent precipitation processes into nonsolvents. The specific process used will depend upon the synthetic process for the production of the NSAT rheology modifier as well as particle size requirements.

It is also possible to coat the NSAT rheology modifier particles with a dissolution promotion water soluble additive, such as a sugar, surfactant or cyclodextrin, or an additional rheology modifier, such as cellulose ether, or a functional ingredient. Additionally, it is also possible to coat the NSAT rheology modifier particles with hydrophobic, hydrophilic, and/or amphiphilic polymers, if desired. This coating step can be accomplished by any means commonly used, such as spray drying and the like.

The particulate product in the presently disclosed and claimed inventive concept(s) can be incorporated into an aqueous system. In one non-limiting embodiment, a method for incorporating a particulate product comprising a nonionic synthetic associative thickener (NSAT) rheology modifier and a dissolution promotion water soluble additive into an aqueous system comprising a water-insoluble polymer, comprises: a) obtaining the particulate product obtained from the method described previously: and b) mixing the particulate product and the aqueous system until the particulate product dissolves,

In another non-limiting embodiment, a method for incorporating a particulate product comprising a nonionic synthetic associative thickener (NSAT) rheology modifier and a dissolution promotion water soluble additive into an aqueous system comprising a water-insoluble polymer, comprises: a) obtaining the particulate product obtained from the method described previously: b) adding the particulate product to the aqueous system in the absence of a water-insoluble polymer to obtain a mixture: c) grinding the mixture; and d) adding a water-insoluble polymer to the mixture until the particulate product dissolves.

In one non-limiting embodiment, the water-insoluble polymer can be latex used to make a waterborne paint. Generally, waterborne paints (latex paints) arc the paints in which resin binders are dispersed in solvents in form of small insoluble resin particles (colloids and coarse dispersions). The resin binders can include, but are not limited to, polyvinyl acetate, styrene-butadiene copolymer, acrylics, polystyrene, and alkyds.

The following examples illustrate the presently disclosed and claimed inventive concept(s), parts and percentages being by weight, unless otherwise indicated. Each example is provided by way of explanation of the presently disclosed and claimed inventive concept(s), not limitation of the presently disclosed and claimed inventive concept(s). In fact, it will be apparent to those skilled in the art that various modifications and variations can be made in the presently disclosed and claimed inventive concept(s) without departing from the scope or spirit of the invention. For instance, features illustrated or described as part of one embodiment, can be used on another embodiment to yield a still further embodiment. Thus, it is intended that the presently disclosed and claimed inventive concept(s) covers such modifications and variations as come within the scope of the appended claims and their equivalents.

### EXAMPLES

Examples 5, 6, 9, 10, 11, 13, 14 and 16 are Inventive Examples, while Examples 1, 2, 3, 4, 7, 8, 12 and 15 are Reference Examples.

### Example 1 - C₁₆-HMPAPE Control

C₁₆-capped poly(acetal-polyether) (C₁₆-HMPAPE) was made as follows. To an Abbe ribbon blender were added polyethylene glycol [PEG-8000, MW∼8000 (1250 g)] and sodium hydroxide (37 g). After sealing the reactor, the mixture was heated at about 80°C for about one hour. Then dibromomethane (18.5 g) was added to the PEG-8000/NaOH mixture and the resulting reaction mixture was heated at about 80°C for about 4 hours to form PEG-8000/methylene copolymer.

To the PEG-8000/methylene copolymer at about 80°C was added 1-bromohexadecane (65 g) and the resulting reaction mixture was heated at about 120°C for about 2 hours. Following this, the reactor was opened and the molten reaction mixture was poured into a plastic tray. Upon cooling to room temperature, the reaction mixture was solidified. The crude reaction mixture was soluble in water (2% solution BF viscosity at 30 rpm = 410 cps).

This solid C₁₆-HMPAPE was cryogenically ground using a Cryomill: SPEC Freezer Mill. Small quantities (∼4 g) of solid materials were milled in liquid nitrogen for about 10 minutes to form a powder. The ground material was passed through stacked ASTM E-11 sieves: #12 (1.7 mm) and #16 (1.18 mm), which resulted in all particles less than 1.18 mm.

### Example 2 - C₁₂-HMPAPE Control

A C₁₂-HMPAPE was made according to Example 1 using 1-bromododecane (70 g) as the capping agent. The solid mixture was ground in a "Mr. Coffee® IDS55" by pulsing the cutter blade for about 30 seconds. The ground material was passed through stacked ASTM E-11 sieves: #12 (1.7 mm) and #16 (1.18 mm), which resulted in all particles less than 1.18 mm.

### Example 3 - C₁₂/C₁₆-HMPAPE Control

A C₁₂/C₁₆ mixed hydrophobe end-capped PAPE (C₁₂/C₁₆-HMPAPE) was made according to Example 1 using 1-bromododecane (20 g) and 1-bromohexadecane (50 g) as the capping agents. This solid was ground in a "Mr. Coffee® IDS55" by pulsing the cutter blade for -30 seconds. The ground material was passed through stacked ASTM E-11 sieves: #12 (1.7 mm) and #16 (1.18 mm) which resulted in all particles less than 1.18 mm.

### Example 4 - XLS-530 Polymer Control

The XLS-530 polymer was obtained by evaporation of water from Aquaflow® XLS-530 (available from Ashland Inc.) followed by dissolution in toluene at 2x weight of the solid. This material was further isolated by precipitation (in 5x volume of hexane), filtration, and drying. This solid was ground in a "Mr. Coffee® IDS55" by pulsing the cutter blade for -30 seconds. The ground material was passed through stacked ASTM E-11 sieves: #12 (1.7 mm) and #16 (1.18 mm) which resulted in all particles less than 1.18 mm.

### Example 5 - Sucrose + C₁₆-HMPAPE (25%/75%)

A mixture of solid C₁₆-HMPAPE (75 g) obtained from Example 1 and sucrose (25 g) was heated at about 80 °C with stirring under N₂ atmosphere for about one hour yielding a solid. This solid was ground in a "Mr. Coffee® IDS55" by pulsing the cutter blade for ∼30 seconds. The ground material was passed through stacked ASTM E-11 sieves: #12 (1.7 mm) and #16 (1.18 mm) which resulted in all particles less than 1.18 mm.

### Example 6 - Sucrose + C₁₆-HMPAPE (50%/50%)

A mixture of solid C₁₆-HMPAPE (50 g) obtained from Example 1 and sucrose (50 g) was heated at about 80°C with stirring under N₂ atmosphere for about one hour yielding a solid. This solid was ground in a "Mr. Coffee® IDS55" by pulsing the cutter blade for ∼30 seconds. The ground material was passed through stacked ASTM E-11 sieves: #12 (1.7 mm) and #16 (1.18 mm) which resulted in all particles less than 1.18 mm.

### Example 7 - β-Cyclodextrin + C₁₆-HMPAPE (2%/98%)

A mixture of solid C₁₆-HMPAPE (49.4 g) obtained from Example 1 and β-Cyclodextrin (β-CD) (1g) was heated at about 100 °C with stirring under N₂ atmosphere for about one hour yielding a solid. This solid was ground in a "Mr. Coffee® IDS55" by pulsing the cutter blade for ∼30 seconds. The ground material was passed through stacked ASTM E.11 sieves: #12 (1.7 mm) and #16 (1.18 mm) which resulted in all particles less than 1.18 mm.

### Example 8 - Methyl-β-Cyclodextrin + C₁₆-HMPAPE (2%/98%)

A mixture of solid C₁₆-HMPAPE (29 g) obtained from Example 1 and Methyl-β-Cyclodextrin (Methy-β-CD) solution (1 g, 50% aqueous solution) was heated at about 100 °C with stirring under N₂ atmosphere for about one hour yielding a solid. This solid was ground in a "Mr. Coffee® IDS55" by pulsing the cutter blade for ∼30 seconds. The ground material was passed through stacked ASTM E-11 sieves: #12 (1.7 mm) and #16 (1.18 mm) which resulted in all particles less than 1.18 mm.

### Example 9 - Sucrose + C₁₂-HMPAPE (25%/75%)

A mixture of solid C₁₂-HMPAPE (75 g) obtained from Example 2 and sucrose (25 g) was heated at about 80 °C with stirring under N₂ atmosphere for about one hour yielding a solid. This solid was ground in a "Mr. Coffee® IDS55" by pulsing the cutter blade for ∼30 seconds. The ground material was passed through stacked ASTM E-11 sieves: #12 (1.7 mm) and #16 (1.18 mm) which resulted in all particles less than 1.18 mm.

### Example 10 - Sucrose + C₁₂-HMPAPE (50%/50%)

A mixture of solid C₁₂-HMPAPE (50 g) obtained from Example 2 and sucrose (50 g) was heated at about 80 °C with stirring under N₂ atmosphere for about one hour yielding a solid. This solid was ground in a "Mr. Coffee® IDS55" by pulsing the cutter blade for ∼30 seconds. The ground material was passed through stacked ASTM E-11 sieves: #12 (1.7 mm) and #16 (1.18 mm) which resulted in all particles less than 1.18 mm.

### Example 11 - Glucose + C₁₂/C₁₆-HMPAPE (50%/50%)

A mixture of solid of C₁₂/C₁₆-HMPAPE (50 g) obtained from Example 3 and glucose (50 g) was heated at about 70 °C with stirring under N₂ atmosphere for about one hour yielding a solid. This solid was ground in a "Mr. Coffee® IDS55" by pulsing the cutter blade for ∼30 seconds. The ground material was passed through stacked ASTM E-11 sieves: #12 (1.7 mm) and #16 (1.18 mm) which resulted in all particles less than 1.18 mm.

### Example 12 - Corn Oil + C₁₂/C₁₆-HMPAPE (25%/75%)

A mixture of C₁₂/C₁₆-HMPAPE (75 g) obtained from Example 3 and corn oil (25 g) was heated at about 70 °C with stirring under N₂ atmosphere for about one hour yielding a solid. This solid was ground in a "Mr. Coffee® IDS55" by pulsing the cutter blade for ∼30 seconds. The ground material was passed through stacked ASTM E-11 sieves: #12 (1.7 mm) and #16 (1.18 mm) which resulted in all particles less than 1.18 mm.

### Example 13 - Sucrose + XLS-530 Polymer (50%/50%)

A mixture of solid polyetherpolyacetal of XLS-530 Polymer (50 g) obtained from Example 4 and sucrose (50 g) was heated at about 80°C with stirring under N₂ atmosphere for about one hour yielding a solid. This solid was ground in a "Mr. Coffee® IDS55" by pulsing the cutter blade for ∼30 seconds. The ground material was passed through stacked ASTM E-11 sieves: #12 (1.7 mm) and #16 (1.18 mm) which resulted in all particles less than 1.18 mm.

### Example 14 - Sucrose + Rheolate® 208 (50%/50%)

A mixture of solid Rheolate® 208 (30 g, available from Elementis Specialties, Inc.) and Sucrose (30 g) was heated at about 130 °C with stirring under N₂ atmosphere for about one hour yielding a solid. This solid was ground in a "Mr. Coffee® IDS55" by pulsing the cutter blade for ∼30 seconds. The ground material was passed through stacked ASTM E-11 sieves: #12 (1.7 mm) and #16 (1.18 mm) which resulted in all particles less than 1.18 mm.

### Example 15 - C₁₆-HMPAPE + Natrosol™ Plus 330 (70%/30%)

A 70 wt%/30 wt% mixture of the solid C₁₆-HMPAPE of Example 1 and Natrosol® Plus 330 hydrophobically modified HEC (available from Ashland Inc.) was melt blended at about 120°C in an Aaron mixer under N₂ atmosphere for about one hour. Cooling to room temperature yielded a solid. This solid was cryogenically ground using a Cryomill: SPEC Freezer Mill. Small quantities (∼4 g) of solid materials were milled in liquid nitrogen for about 10 minutes to form a powder. The ground material was passed through stacked ASTM E-11 sieves: #12 (1.7 mm) and #16 (1.18 mm) which resulted in all particles less than 1.18 mm.

### Example 16 - Blend of Product of Example 15 and Sucrose (50%/50%)

A mixture of the product of Example 15 (50 g) and Sucrose (50 g) was heated at about 130°C with stirring under N₂ atmosphere for one hour yielding a solid. This solid was ground in a "Mr. Coffee® IDS55" by pulsing the cutter blade for ∼30 seconds. The ground material was passed through stacked ASTM E-11 sieves: #12 (1.7 mm) and #16 (1.18 mm) which resulted in all particles less than 1.18 mm.

### Dissolution Testing

To illustrate improvements in dissolution characteristics arising from the incorporation of various additives, the samples from the preceding Examples were subjected to aqueous and paint dissolution testing.

### Aqueous Dissolution Test

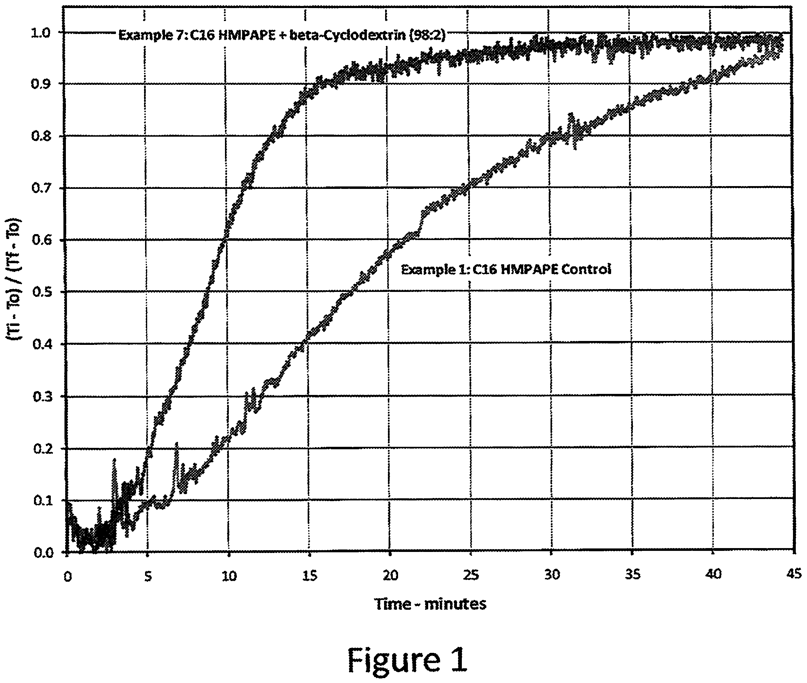

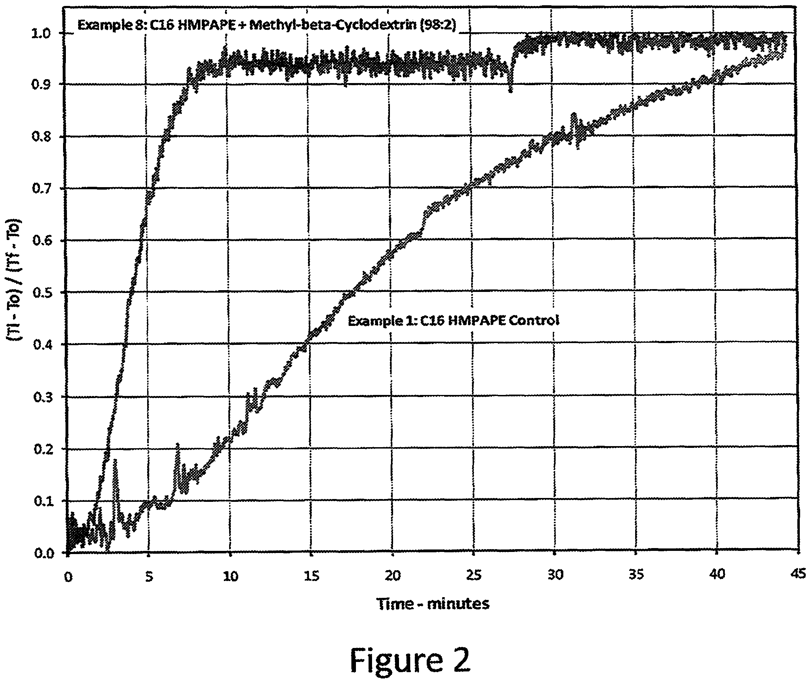

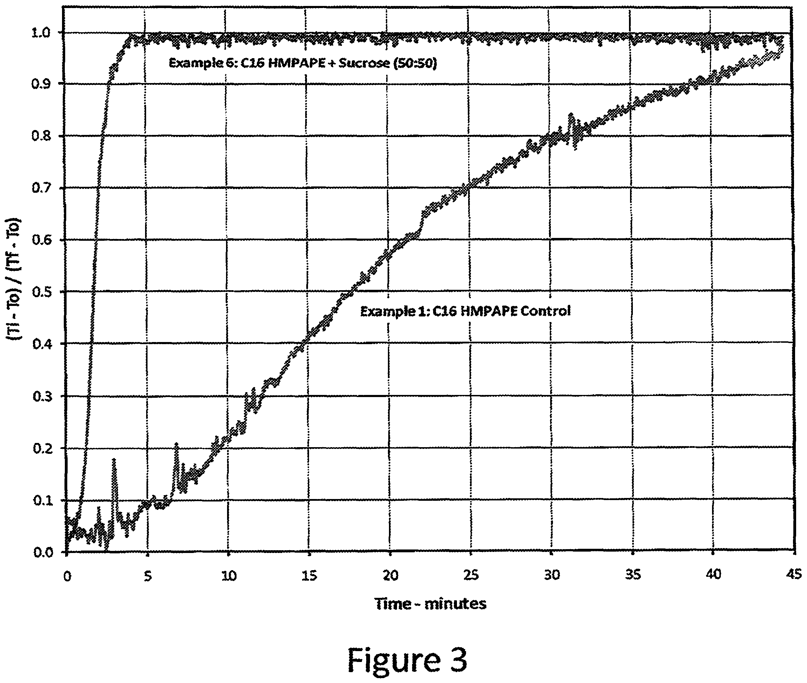

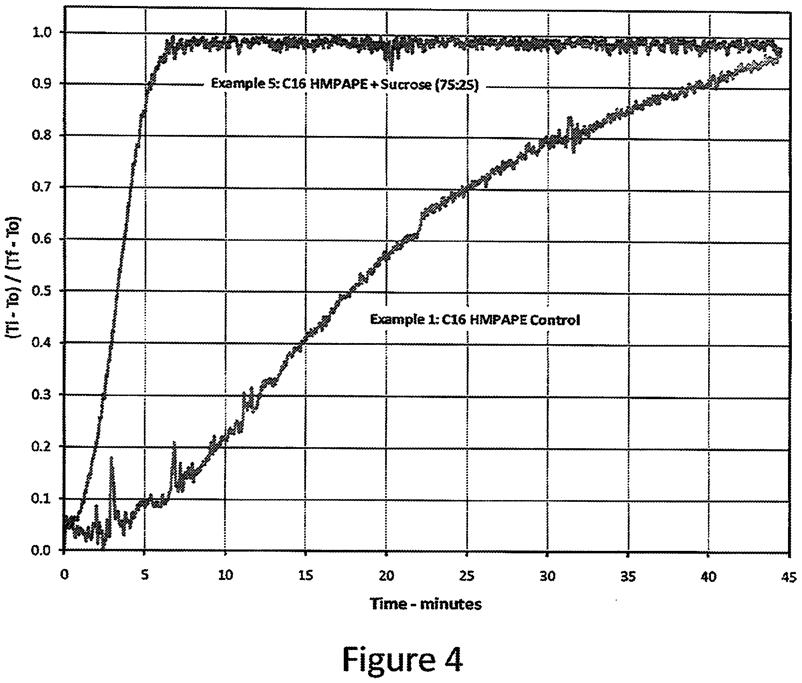

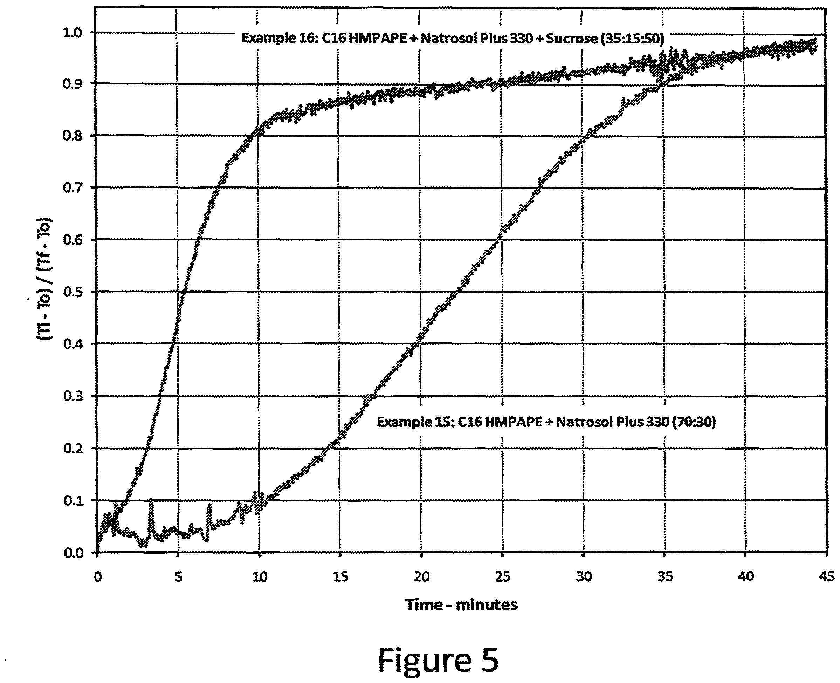

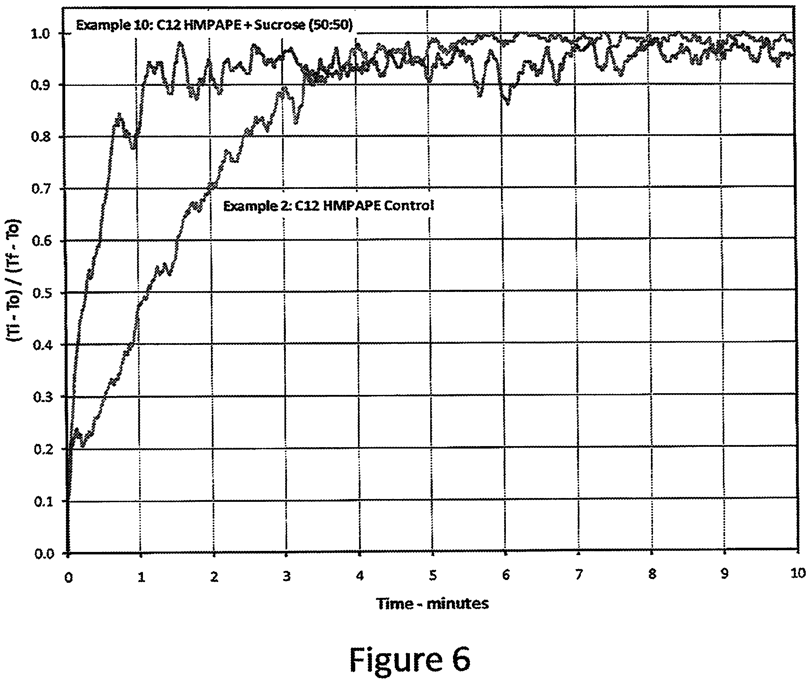

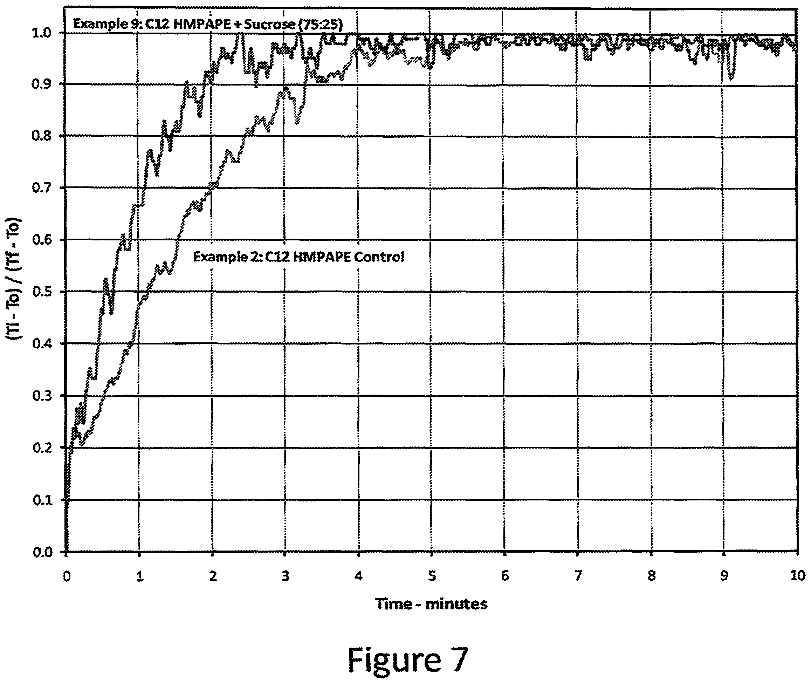

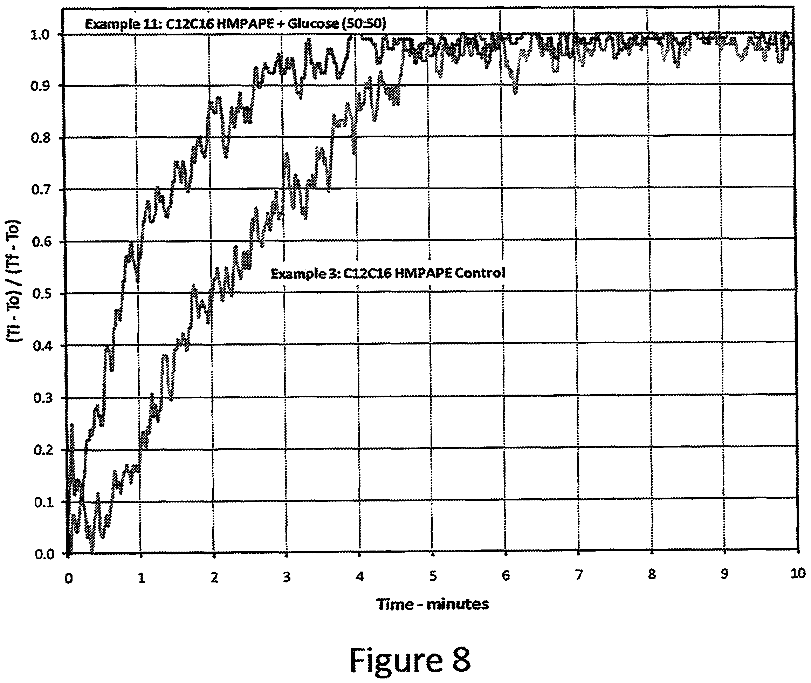

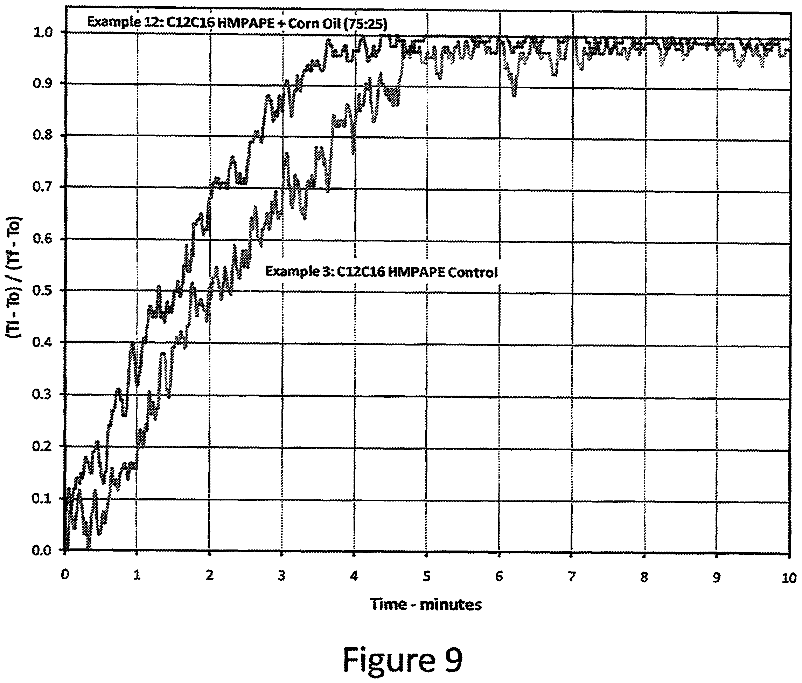

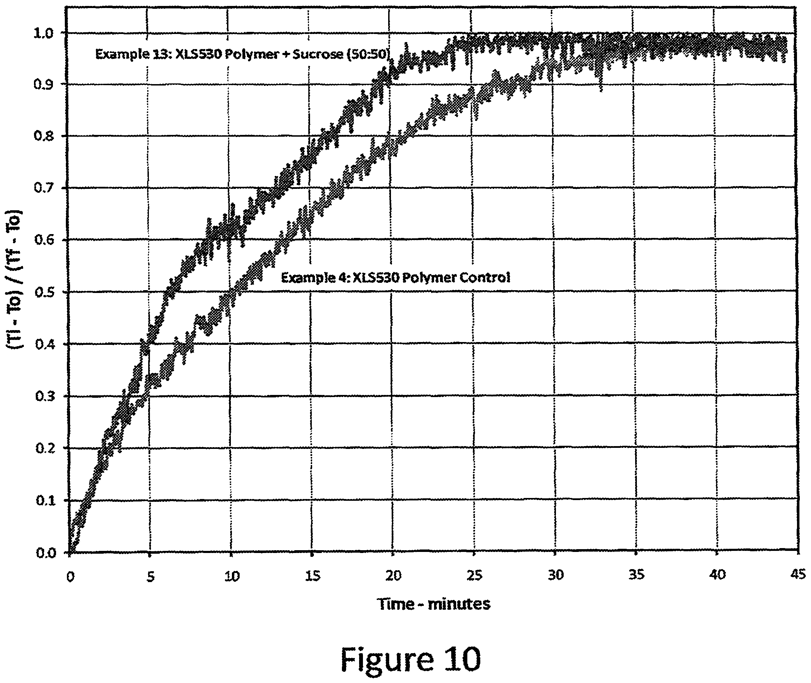

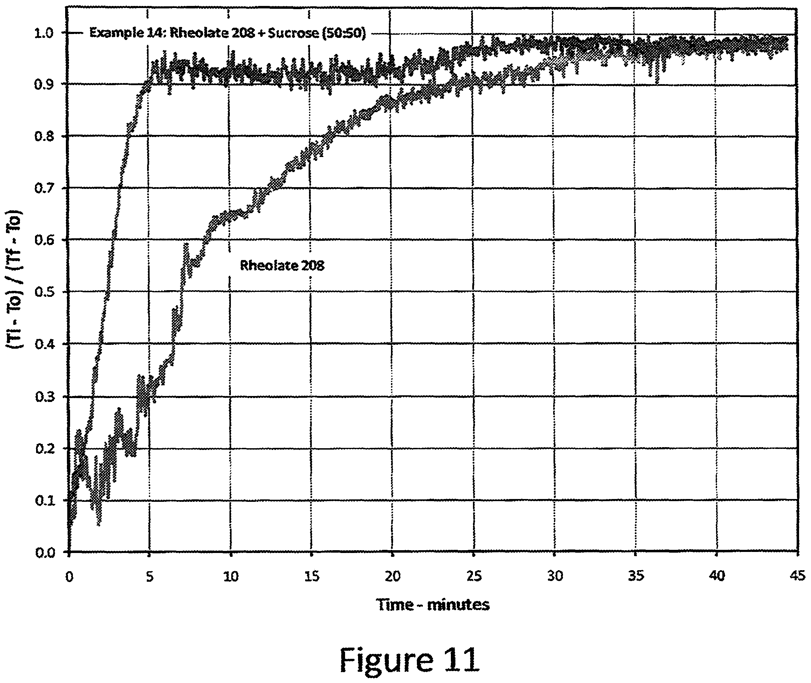

The aqueous dissolution of rheology modifier was monitored using an anchor blade coupled with HAAKE viscometer. The dissolution was carried out in an 8 oz jar containing 200 grams of 100 mM of pH 8.0 Tris buffer. 2.0 grams of active powder rheology modifiers (with and without additives) from the above Examples were added dry to the jar which was mixing at 600 rpm. The mixing was carried out for about 45 minutes. Torque data was collected as a function of time which is analogous to dissolution as a function of time, as torque is related to the viscosity builds up of the solution which is dependent on the dissolution of the rheology modifier. Figures 1-11 depict the dissolution data for different samples from the preceding Examples. Table 1 summarizes the results of aqueous dissolution tests in Figures 1 to 11.

**Table 1 - Aqueous Dissolution Results**

| **Figure** | **Control** | **Blend** | **Results** |
|---|---|---|---|
| 1 | C₁₆-HMPAPE | C₁₆-HMPAPE + β-CD (98:2) | Blend dissolves much more rapidly than control. Control not fully dissolved after 45 minutes |
| 2 | C₁₆-HMPAPE | C₁₆-HMPAPE + Methyl-β-CD (98:2) | Blend dissolves much more rapidly than control. Control not fully dissolved after 45 minutes |
| 3 | C₁₆-HMPAPE | C₁₆-HMPAPE + Sucrose (50:50) | Blend dissolves within ∼5 minutes. Control not fully dissolved after 45 minutes |
| 4 | C₁₆-HMPAPE | C₁₆-HMPAPE + Sucrose (75:25) | Blend dissolves within ∼8 minutes. Control not fully dissolved after 45 minutes |
| 5 | C₁₆-HMPAPE + Natrosol™ Plus 330 (70:30) | C₁₆-HMPAPE + Natrosol™ Plus 330 + Sucrose (35:15:50) | Sucrose-containing blend dissolves more rapidly than control. |
| 6 | C₁₂-HMPAPE | C₁₂-HMPAPE + Sucrose (50:50) | Sucrose-containing blend dissolves more rapidly than control. |
| 7 | C₁₂-HMPAPE | C₁₂-HMPAPE + Sucrose (75:25) | Sucrose-containing blend dissolves more rapidly than control. |
| 8 | C₁₂/C₁₆-HMPAPE | C₁₂/C₁₆-HMPAPE + Glucose (50:50) | Sucrose-containing blend dissolves more rapidly than control. |
| 9 | C₁₂/C₁₆-HMPAPE | C₁₂/C₁₆-HM PAPE + Corn Oil (75:25) | Corn oil-containing blend dissolves more rapidly than control. |
| 10 | XLS530 Polymer | XLS530 Polymer + Sucrose (50:50) | Sucrose-containing blend dissolves more rapidly than control. |
| 11 | Rheolate® 208 | Rheoloate® 208 + Sucrose (50:50) | Sucrose-containing blend dissolves more rapidly than control. |

### Paint Dissolution Test

The paint dissolution of the rheology modifier was monitored using a marine propeller blade coupled with HAAKE viscometer. The dissolution **was** carried out in an 8 oz jar containing 245 grams of 45.5 PVC paint based on Rhoplex™ SG-10M (formulation is shown in Table 2).

**Table 145.5 PVC Rhoplex™ SG-10M Paint Formulation**

| **Raw Material** | **Description** | **Weight %** |
|---|---|---|
| Water | | 11.13 |
| Nuosept® 95 | Biocide | 0.23 |
| Tamol 731A | Dispersant | 0.46 |
| Igepal® CO-660 | Surfactant | 0.22 |
| Igepal® CO-897 | Surfactant | 0.31 |
| Propylene glycol | open time/freeze-thaw | 1.31 |
| Rhodeline® 640 | Defoamer | 0.10 |
| TiPure® R931 | titanium dioxide | 13.92 |
| ASP NC Clay | Clay | 10.02 |
| No. 10 White | extender:CaCO₃ | 7.52 |
| Water | | 4.48 |
| Rhoplex™ SG10M | Acrylic Latex | 27.84 |
| Texanol™ | Coalescent | 0.84 |
| Rhodeline® 640 | Defoamer | 0.19 |
| Propylene glycol | open time/freeze-thaw | 1.00 |
| Water | | 20.43 |

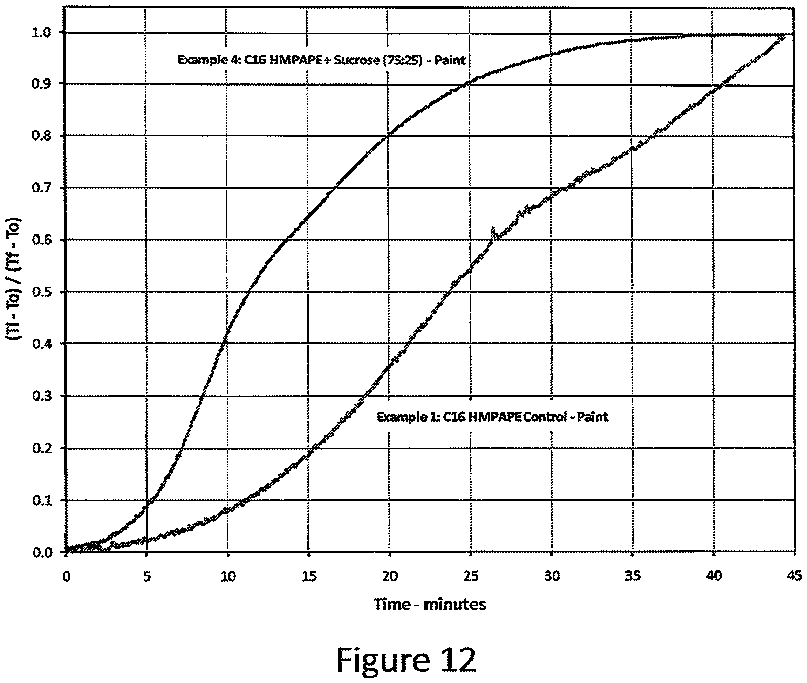

0.6 grams of active powder rheology modifier (with and without additives) from the above Examples were added dry to the jar which was mixing at 600 rpm. The mixing was carried out for about 45 minutes. Torque data was collected as a function of time which is analogous to dissolution as a function of time, as torque is related to the viscosity builds up of the solution which is dependent on the dissolution of the rheology modifier. The comparison of dissolution characteristics of C₁₆-HMPAPE powders in paint with and without additive is shown in Figure 12. It's evident that the composition with sucrose has significantly better dissolution characteristics. Table 3 presents analogous results for dissolution in paint.

**Table 3 - Paint Dissolution Test**

| **Figure** | **Control** | **Blend** | **Results** |
|---|---|---|---|
| 12 | C₁₆-HMPAPE-Paint | C₁₆-HMPAPE + Sucrose (75:25) - Paint | Sucrose-modification significantly improves dissolution characteristics |

### Paint Grind Addition Test

A sample of Example 2 powder was added (0.56 wt%) to the "Grind Phase" of the paint making process following addition of water. The paint formula (46 PVC, acrylic pastel base) used is shown below in Table 4. The grind was prepared using a Cowles mixing blade and a Dispermat mixer.

**Table 4 Paint Formula**

| **Ingredient** | **wt%** |
|---|---|
| Water | 10.90 |
| Example 4 powder | 0.56 |
| Tamol™ 1124 | 0.61 |
| KTPP | 0.13 |
| Proxel™ GXL | 0.27 |
| pHEX 110 | 0.13 |
| Strodex® LFK-70 | 0.18 |
| Drew T-4507 | 0.18 |
| Ethylene Glycol | 1.33 |
| Ti-Pure R-706 | 20.38 |
| Minex 4 | 13.29 |
| Iceberg | 4.43 |
| Strodex™ TH-100 | 0.18 |
| **Subtotal (Grind)** | **52.57** |
| Rhoplex SG-30 | 31.3 |
| Texanol™ | 0.79 |
| Drew T-4507 | 0.27 |
| Water | 10.90 |
| Aquaflow™ NLS-220 | 1.22 |
| Water | 2.95 |
| **Total (Grind + Let-Down)** | **100.00** |

The C₁₂-HMPAPE powder of Example 2 was dissolved rapidly. The final paint had a Stormer viscosity of 100 KU and ICI viscosity of 1.85 P.

While the invention has been described with respect to specific embodiments, it should be understood that the invention should not be limited thereto and that many variations and modifications are possible without departing from the spirit and scope of the invention.

It is, of course, not possible to describe every conceivable combination of the components or methodologies for purpose of describing the disclosed information, but one of ordinary skill in the art can recognize that many further combinations and permutations of the disclosed information are possible. Accordingly, the disclosed information is intended to embrace all such alternations, modifications and variations that fall within the spirit and scope of the appended claims.

## Claims

1. A particulate product comprising a nonionic synthetic associative thickener (NSAT) rheology modifier and a dissolution promotion water soluble additive, wherein the dissolution promotion water soluble additive comprises a sugar selected from the group consisting of sucrose, fructose, glucose, and sorbitol.

2. The particulate product of claim 1, wherein the NSAT rheology modifier is selected from the group consisting of hydrophobically-modified ethoxylated urethane (HEUR), hydrophobically-modified polyethylene glycol (HMPEG), and hydrophobically-modified polyacetal-polyether (HMPAPE).

3. The particulate product of claim 1, wherein the dissolution promotion water soluble additive has a molecular weight (Mw) less than 2000 Daltons.

4. The particulate product of claim 1, further comprising an additional rheology modifier.

5. The particulate product of claim 4, wherein the additional rheology modifier comprises a cellulose ether.

6. The particulate product of claim 5, wherein the cellulose ether is selected from the group consisting of hydroxy ethyl cellulose (HEC), carboxymethyl cellulose (CMC), methyl cellulose (MC), methylhydroxyethyl cellulose (MHEC), ethylhydroxyethyl cellulose (EHEC), methylhydroxylpropyl cellulose (MHPC), and hydrophobically-modified derivatives thereof.

7. The particulate product of claim 1, further comprising a functional ingredient selected from the group consisting of dispersants, wetting agents, biocides, antifoams, and coalescents.

8. The particulate product of claim 1, wherein less than 5% by weight of the particulate product is retained on 1.18 mm sieve (No. 16) measured according to *ASTM* C136 - 06 Standard Test Method for Sieve Analysis of Fine and Coarse Aggregates.

9. The particulate product of any of the preceding claims, further comprising a coating composition selected from the group consisting of a hydrophobic polymer, a hydrophilic polymer, and an amphiphilic polymer.

10. A method for making a particulate product comprising a nonionic synthetic associative thickener (NSAT) rheology modifier and a dissolution promotion water soluble additive according to claim 1, comprising the steps of:
a) obtaining the NSAT rheology modifier and the dissolution promotion water soluble additive;
b) mixing the NSAT rheology modifier and the dissolution promotion water soluble additive; and
c) producing the particulate product from step b).

11. The method of claim 10, wherein the step c) is conducted using spray dryers, disc pastiflators, drum flakers, or grinders.

12. The method of claim 10, further comprising step d) cryogenic grinding.

13. A method for incorporating a particulate product comprising a nonionic synthetic associative thickener (NSAT) rheology modifier and a dissolution promotion water soluble additive into an aqueous system comprising a water-insoluble polymer, comprising the steps of:
a) obtaining the particulate product according to claim 10; and
b) mixing the particulate product and the aqueous system until the particulate product dissolves,
wherein less than 5% by weight of the particulate product is retained on 1.18 mm sieve (No. 16) measured according to *ASTM* C136 - 06 Standard Test Method for Sieve Analysis of Fine and Coarse Aggregates, and the NSAT rheology modifier is selected from the group consisting of hydrophobically-modified ethoxylated urethane (HEUR), hydrophobically-modified polyethylene glycol (HMPEG), and hydrophobically-modified polyacetal-polyether (HMPAPE).

14. A method for incorporating a particulate product comprising a nonionic synthetic associative thickener (NSAT) rheology modifier and a dissolution promotion water soluble additive into an aqueous system comprising a water-insoluble polymer, comprising the steps of:
a) obtaining the particulate product according to claim 10;
b) adding the particulate product to the aqueous system in the absence of the water- insoluble polymer to obtain a mixture;
c) grinding the mixture; and
d) adding the water-insoluble polymer to the mixture until the particulate product dissolves,
wherein the NSAT rheology modifier is selected from the group consisting of hydrophobically-modified ethoxylated urethane (HEUR), hydrophobically-modified polyethylene glycol (HMPEG), and hydrophobically-modified polyacetal-polyether (HMPAPE).

## Patentansprüche

1. Partikelförmiges Produkt, umfassend einen Nichtionisches-synthetisches-assoziatives-Verdickungsmittel(NSAT)-Rheologiemodifikator und einen auflösungsfördernden wasserlöslichen Zusatzstoff, wobei der auflösungsfördernde wasserlösliche Zusatzstoff einen Zucker ausgewählt aus der Gruppe bestehend aus Saccharose, Fructose, Glucose und Sorbit umfasst.

2. Partikelförmiges Produkt gemäß Anspruch 1, wobei der NSAT-Rheologiemodifikator ausgewählt ist aus der Gruppe bestehend aus hydrophob modifiziertem ethoxyliertem Urethan (HEUR), hydrophob modifiziertem Polyethylenglycol (HMPEG) und hydrophob modifiziertem Polyacetal-Polyether (HMPAPE).

3. Partikelförmiges Produkt gemäß Anspruch 1, wobei der auflösungsfördernde wasserlösliche Zusatzstoff ein Molekulargewicht (Mw) von weniger als 2000 Dalton aufweist.

4. Partikelförmiges Produkt gemäß Anspruch 1, ferner umfassend einen zusätzlichen Rheologiemodifikator.

5. Partikelförmiges Produkt gemäß Anspruch 4, wobei der zusätzliche Rheologiemodifikator einen Celluloseether umfasst.

6. Partikelförmiges Produkt gemäß Anspruch 5, wobei der Celluloseether ausgewählt ist aus der Gruppe bestehend aus Hydroxyethylcellulose (HEC), Carboxymethylcellulose (CMC), Methylcellulose (MC), Methylhydroxyethylcellulose (MHEC), Ethylhydroxyethylcellulose (EHEC), Methylhydroxypropylcellulose (MHPC) und hydrophob modifizierten Derivaten davon.

7. Partikelförmiges Produkt gemäß Anspruch 1, ferner umfassend einen funktionellen Inhaltsstoff ausgewählt aus der Gruppe bestehend aus Dispergiermitteln, Netzmitteln, Bioziden, Antischaummitteln und Koaleszenzmitteln.

8. Partikelförmiges Produkt gemäß Anspruch 1, wobei weniger als 5 Gew.-% des partikelförmigen Produkts auf einem 1,18-mm-Sieb (Nr. 16) zurückgehalten werden, gemessen gemäß *ASTM* C136-06, "Standard Test Method for Sieve Analysis of Fine and Coarse Aggregates".

9. Partikelförmiges Produkt gemäß einem der vorstehenden Ansprüche, ferner umfassend eine Beschichtungszusammensetzung ausgewählt aus der Gruppe bestehend aus einem hydrophoben Polymer, einem hydrophilen Polymer und einem amphiphilen Polymer.

10. Verfahren zur Herstellung eines partikelförmigen Produkts, das einen Nichtionisches-synthetisches-assoziatives-Verdickungsmittel(NSAT)-Rheologiemodifikator und einen auflösungsfördernden wasserlöslichen Zusatzstoff umfasst, gemäß Anspruch 1, umfassend die Schritte:
a) Erhalten des NSAT-Rheologiemodifikators und des auflösungsfördernden wasserlöslichen Zusatzstoffs;
b) Mischen des NSAT-Rheologiemodifikators und des auflösungsfördernden wasserlöslichen Zusatzstoffs; und
c) Herstellen des partikelförmigen Produkts aus Schritt b).

11. Verfahren gemäß Anspruch 10, wobei Schritt c) unter Verwendung von Sprühtrocknern, Scheibenpastiflatoren, Trommelflockiervorrichtungen oder Mahlvorrichtungen durchgeführt wird.

12. Verfahren gemäß Anspruch 10, ferner umfassend einen Schritt d) kryogenes Mahlen.

13. Verfahren zum Einverleiben eines partikelförmigen Produkts, das einen Nichtionisches-synthetisches-assoziatives-Verdickungsmittel(NSAT)-Rheologiemodifikator und einen auflösungsfördernden wasserlöslichen Zusatzstoff umfasst, in ein wässriges System, das ein wasserunlösliches Polymer umfasst, umfassend die Schritte:
a) Erhalten des partikelförmigen Produkts gemäß Anspruch 10; und
b) Mischen des partikelförmigen Produkts und des wässrigen Systems, bis sich das partikelförmige Produkt löst,
wobei weniger als 5 Gew.-% des partikelförmigen Produkts auf einem 1,18-mm-Sieb (Nr. 16) zurückgehalten werden, gemessen gemäß *ASTM* C136-06, "Standard Test Method for Sieve Analysis of Fine and Coarse Aggregates", und der NSAT-Rheologiemodifikator ausgewählt ist aus der Gruppe bestehend aus hydrophob modifiziertem ethoxyliertem Urethan (HEUR), hydrophob modifiziertem Polyethylenglycol (HMPEG) und hydrophob modifiziertem Polyacetal-Polyether (HMPAPE).

14. Verfahren zum Einverleiben eines partikelförmigen Produkts, das einen Nichtionisches-synthetisches-assoziatives-Verdickungsmittel(NSAT)-Rheologiemodifikator und einen auflösungsfördernden wasserlöslichen Zusatzstoff umfasst, in ein wässriges System, das ein wasserunlösliches Polymer umfasst, umfassend die Schritte:
a) Erhalten des partikelförmigen Produkts gemäß Anspruch 10;
b) Zugeben des partikelförmigen Produkts zu dem wässrigen System ohne Vorhandensein des wasserunlöslichen Polymers, um ein Gemisch zu erhalten;
c) Mahlen des Gemischs; und
d) Zugeben des wasserunlöslichen Polymers zu dem Gemisch, bis sich das partikelförmige Produkt löst,
wobei der NSAT-Rheologiemodifikator ausgewählt ist aus der Gruppe bestehend aus hydrophob modifiziertem ethoxyliertem Urethan (HEUR), hydrophob modifiziertem Polyethylenglycol (HMPEG) und hydrophob modifiziertem Polyacetal-Polyether (HMPAPE).

## Revendications

1. Produit particulaire comprenant un modificateur de rhéologie de type épaississant associatif synthétique non ionique (NSAT) et un additif hydrosoluble favorisant la dissolution, dans lequel l'additif hydrosoluble favorisant la dissolution comprend un sucre sélectionné dans le groupe constitué du saccharose, du fructose, du glucose et du sorbitol.

2. Produit particulaire selon la revendication 1, dans lequel le modificateur de rhéologie de type NSAT est sélectionné dans le groupe constitué de l'uréthane éthoxylé modifié pour devenir hydrophobe (HEUR), du polyéthylène glycol modifié pour devenir hydrophobe (HMPEG) et du polyacétal-polyéther modifié pour devenir hydrophobe (HMPAPE).

3. Produit particulaire selon la revendication 1, dans lequel l'additif hydrosoluble favorisant la dissolution a une masse moléculaire (Mw) inférieure à 2 000 daltons.

4. Produit particulaire selon la revendication 1, comprenant en outre un modificateur de rhéologie additionnel.

5. Produit particulaire selon la revendication 4, dans lequel le modificateur de rhéologie additionnel comprend un éther de cellulose.

6. Produit particulaire selon la revendication 5, dans lequel l'éther de cellulose est sélectionné dans le groupe constitué de l'hydroxy-éthylcellulose (HEC), de la carboxyméthylcellulose (CMC), de la méthylcellulose (MC), de la méthyl-hydroxyéthylcellulose (MHEC), de l'éthylhydroxyéthylcellulose (EHEC), de la méthyl-hydroxylpropylcellulose (MHPC), et de dérivés de celles-ci modifiés pour devenir hydrophobes.

7. Produit particulaire selon la revendication 1, comprenant en outre un ingrédient fonctionnel sélectionné dans le groupe constitué de dispersants, d'agents mouillants, de biocides, d'antimousses et d'agents de coalescence.

8. Produit particulaire selon la revendication 1, dans lequel une quantité inférieure à 5 % en poids du produit particulaire est retenue sur un tamis de 1,18 mm (n° 16), mesurée selon la méthode d'essai normalisée ASTM C136-06 pour l'analyse par tamisage des agrégats fins et grossiers.

9. Produit particulaire selon l'une quelconque des revendications précédentes, comprenant en outre une composition de revêtement sélectionnée dans le groupe constitué d'un polymère hydrophobe, d'un polymère hydrophile, et d'un polymère amphiphile.

10. Procédé de fabrication d'un produit particulaire comprenant un modificateur de rhéologie de type épaississant associatif synthétique non ionique (NSAT) et un additif hydrosoluble favorisant la dissolution selon la revendication 1, comprenant les étapes qui consistent à :
a) obtenir le modificateur de rhéologie de type NSAT et l'additif hydrosoluble favorisant la dissolution ;
b) mélanger le modificateur de rhéologie de type NSAT et l'additif hydrosoluble favorisant la dissolution ; et
c) produire le produit particulaire issu de l'étape b).

11. Procédé selon la revendication 10, dans lequel l'étape c) est conduite en utilisant des séchoirs par atomisation, des dispositifs à disques pour la formation de pastilles, des dispositifs à tambour pour l'agglomération en flocons, ou des broyeurs.

12. Procédé selon la revendication 10, comprenant en outre une étape d) de broyage cryogénique.

13. Procédé d'incorporation d'un produit particulaire comprenant un modificateur de rhéologie de type épaississant associatif synthétique non ionique (NSAT) et un additif hydrosoluble favorisant la dissolution dans un système aqueux comprenant un polymère insoluble dans l'eau, comprenant les étapes qui consistent à :
a) obtenir le produit particulaire selon la revendication 10 ; et
b) mélanger le produit particulaire et le système aqueux jusqu'à ce que le produit particulaire se dissolve,
dans lequel une quantité inférieure à 5 % en poids du produit particulaire est retenue sur un tamis de 1,18 mm (n° 16), mesurée selon la méthode d'essai normalisée ASTM C136-06 pour l'analyse par tamisage des agrégats fins et grossiers, et le modificateur de rhéologie de type NSAT est sélectionné dans le groupe constitué de l'uréthane éthoxylé modifié pour devenir hydrophobe (HEUR), du polyéthylène glycol modifié pour devenir hydrophobe (HMPEG) et du polyacétal-polyéther modifié pour devenir hydrophobe (HMPAPE).

14. Procédé d'incorporation d'un produit particulaire comprenant un modificateur de rhéologie de type épaississant associatif synthétique non ionique (NSAT) et un additif hydrosoluble favorisant la dissolution dans un système aqueux comprenant un polymère insoluble dans l'eau, comprenant les étapes qui consistent à :
a) obtenir le produit particulaire selon la revendication 10 ;
b) ajouter le produit particulaire au système aqueux en l'absence du polymère insoluble dans l'eau pour obtenir un mélange ;
c) broyer le mélange ; et
d) ajouter le polymère insoluble dans l'eau au mélange jusqu'à ce que le produit particulaire se dissolve,
dans lequel le modificateur de rhéologie de type NSAT est sélectionné dans le groupe constitué de l'uréthane éthoxylé modifié pour devenir hydrophobe (HEUR), du polyéthylène glycol modifié pour devenir hydrophobe (HMPEG) et du polyacétal-polyéther modifié pour devenir hydrophobe (HMPAPE).
